# EUROPEAN PATENT APPLICATION

(11) **EP 2 916 517 A1**
(43) Date of publication of application: **09.09.2015**
(21) Application number: 15155920.0
(22) Date of filing: 20.02.2015
(51) Int. Cl.: H04L 29/06, H04L 29/08, H04L 12/24, H04N 1/44, H04N 1/00

(54) **Information processing apparatus, control method, program, and storage medium storing program**

(30) Priority: 06.03.2014 JP 2014044262
(71) Applicant: CANON KABUSHIKI KAISHA, Ohta-ku Tokyo 146-8501 (JP)
(72) Inventor: Yasuhara, Hiroshi, Ohta-ku, Tokyo (JP)
(74) Representative: Uffindell, Christine Helen

(57) **Abstract**

An information processing apparatus (101, 103) which can execute an application requiring user authentication displays a Web page without performing authentication in a case where a local browser requests for a Web page upon logging in to the information processing apparatus. On the other hand, in a case where a remote browser requests for a Web page, the apparatus causes the remote browser to display an authentication screen and displays a Web page based on authentication performed via the authentication screen.

## Description

### BACKGROUND OF THE INVENTION

### Field of the Invention

The present invention relates to an information processing apparatus having a server function, a control method, a program and a storage medium storing a program.

### Description of the Related Art

An information processing apparatus such as a PC being connected to a Web server on a network, and an operation screen provided by the Web server being displayed on a Web browser of the information processing apparatus is known. In this case, first of all, the Web browser of the information processing apparatus requests the Web server for the operation screen. In response to the request from the information processing apparatus, a Web application on the Web server transmits, as a response, HTML data for making the Web browser display the operation screen to the information processing apparatus. The Web browser of the information processing apparatus analyzes the received HTML data and displays the operation screen based on the description of the HTML data. In addition, when the user inputs an instruction via the operation screen displayed on the Web browser, the Web browser notifies the Web server of the input instruction. Upon receiving the notification, the Web application executes processing in accordance with the input instruction.

Recently, MFPs (Multi Function Peripheral) including a scanner and a printer also include a Web browser like that described above. Such an MFP displays an operation screen provided by the Web server on the Web browser of the MFP according to the above procedure, and receives various types of instructions from the user. In addition, the MFP may have the function of a Web server. In such a case, a use case is known in which the user uses a function of the MFP by operating a Web application, which operates on the Web server on the MFP, via the browser on the same MFP.

Recently, there are many cases in which an MFP has an authentication function, and requires authentication for resource access to the MFP. Authentication is executed in various forms, including executing authentication on the operation unit of the MFP and executing authentication when access is made from a Web browser to a Web application on the MFP. When, for example, changing setting information in the MFP, the administrator accesses a Web application on the MFP via the Web browser on an information processing apparatus such as a PC. In order to determine whether the accessing user is an administrator, the MFP requests for an authentication operation by displaying an authentication screen on the Web browser. In addition, when the administrator changes setting information from the operation unit of the MFP, the MFP displays an authentication screen on the operation unit and requests the user to perform an authentication operation. In any case, the user needs to execute an authentication operation to change setting information.

Consider, for example, a case in which after the user performs a login operation from the operation unit of an MFP, a Web browser accesses a Web application which operates on the MFP. In this case, the Web application generates a new session without considering from where the access is made, and hence displays an authentication screen to the user and requests for an authentication operation. That is, the user needs to perform the authentication operation of inputting authentication information again in spite of the fact that he/she has already performed the login operation.

Japanese Patent Laid-Open No. 2009-110542 discloses a technique of dynamically changing display contents depending on whether a built-in browser is used or in accordance with the type of Web browser in use. However, according to Japanese Patent Laid-Open No. 2009-110542, only display contents are changed, and hence it is not possible to solve the problem of deterioration in usability associated with the above user operation.

### SUMMARY OF THE INVENTION

An aspect of the present invention is to eliminate the above-mentioned problems with the conventional technology. The present invention provides an information processing apparatus which properly controls the display of an authentication screen in accordance with an access source when access is made to an application requiring authentication, a control method, a program and a storage medium storing a program.

The present invention in its first aspect provides an information processing apparatus as specified in claims 1 to 9.

The present invention in its second aspect provides a control method as specified in claim 10.

The present invention in its third aspect provides a program as specified in claim 11, and in its fourth aspect provides a computer-readable storage medium as specified in claim 12.

According to the present invention, when access is made to an application requiring authentication, it is possible to properly control the display of an authentication screen in accordance with the access source.

Further features of the present invention will become apparent from the following description of embodiments with reference to the attached drawings.

### BRIEF DESCRIPTION OF THE DRAWINGS

Fig. 1 is a view showing the arrangement of an information communication system including an information processing apparatus and other apparatuses;
Fig. 2 is a block diagram showing the hardware configuration of an MFP;
Fig. 3 is a block diagram showing the software configuration of the MFP;
Fig. 4 is a view showing a login screen displayed on an operation unit;
Fig. 5 is a view showing a remote login screen;
Fig. 6 is a view showing a LoginContext management table and its data structure;
Fig. 7 is a flowchart showing login processing by the MFP;
Fig. 8 is a flowchart showing display control processing for an authentication screen;
Fig. 9 is a flowchart showing logout processing by a local login unit; and
Fig. 10 is a flowchart showing logout processing by a remote login unit.

### DESCRIPTION OF THE EMBODIMENTS

Preferred embodiments of the present invention will now be described hereinafter in detail, with reference to the accompanying drawings. Each of the embodiments of the present invention described below can be implemented solely or as a combination of a plurality of the embodiments or features thereof where necessary or where the combination of elements or features from individual embodiments in a single embodiment is beneficial. It is to be understood that the following embodiments are not intended to limit the claims of the present invention, and that not all of the combinations of the aspects that are described according to the following embodiments are necessarily required with respect to the means to solve the problems according to the present invention. Note that the same reference numerals denote the same constituent elements, and a description of them will be omitted.

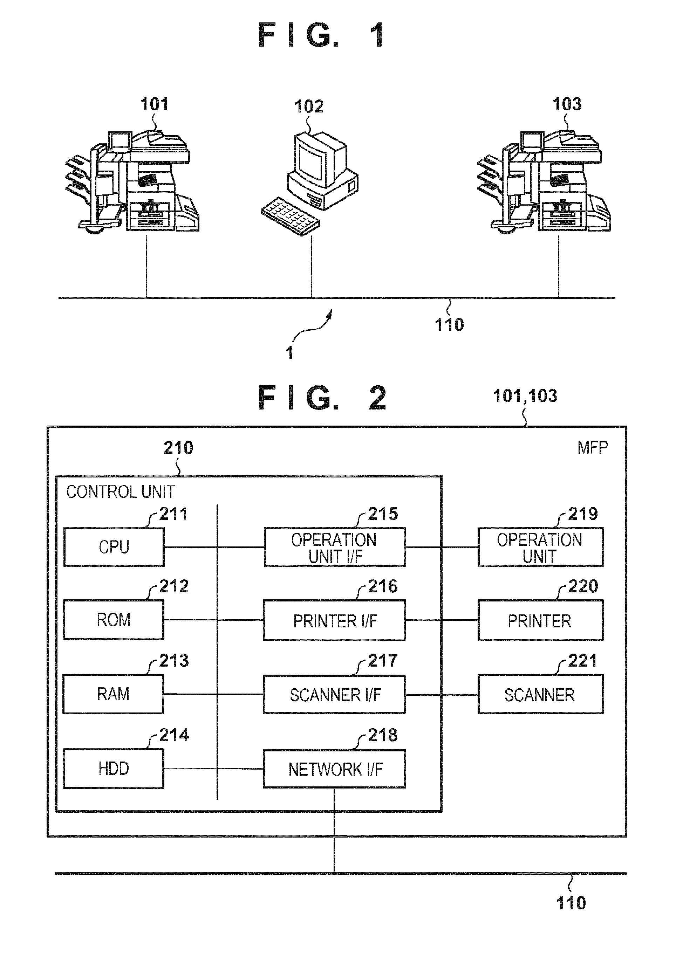

Fig. 1 is a view showing the arrangement of an information communication system including an information processing apparatus and other apparatuses according to this embodiment. An information processing system 1 includes MFPs (Multi Function Peripherals) 101 and 103, each as an example of an information processing apparatus, and a client PC 102. An MFP is a multi function peripheral (image forming apparatus) obtained by integrating a plurality of functions such as a scan function, print function, and FAX function. The MFP 101, the client PC 102, and the MFP 103 included in the system 1 are communicatively connected to each other via a network 110 such as a LAN. Note that apparatuses other than those shown in Fig. 1 may be connected to the network 110. In addition, the network 110 may be a wired communication network or wireless communication network. In the system 1, the MFP 101 or 103 has a Web server function. The user of the client PC 102 can use various types of applications, which can be executed by the Web server function, via the network 110. In addition, the user of the MFP 101 or 103 can use various types of applications which can be executed by the Web server function of the MFP of the user. In this embodiment, various types of applications include, for example, an editing application for setting information concerning the copy function and the like which can be executed by the MFP.

Fig. 2 is a block diagram showing the hardware configuration of the MFPs 101 and 103. This embodiment will exemplify the MFP 101 as a representative example of the MFPs 101 and 103. A control unit 210 including a CPU 211 comprehensively controls the overall operation of the MFP 101. The CPU 211 performs engine control corresponding to each function such as read control and transmission control by reading out and executing a control program stored in a ROM 212. As a result, the MFP 101 can implement each function such as a copy/scan (transmission)/print function. A RAM 213 is used as the main memory of the CPU 211 and its temporary storage area such as a work area. An HDD (Hard Disk Drive) 214 stores image data, function setting information, and various types of programs. An operation in this embodiment is implemented by, for example, causing the CPU 211 to load a control program from the ROM 212 into the RAM 213 and execute the program.

An operation unit I/F 215 can establish a communication connection between an operation unit 219 and the control unit 210. The operation unit 219 includes a liquid crystal display unit having a touch panel function and a keyboard, and can accept an instruction to execute each function of the MFP 101 or a setting operation from the user. In addition, the operation unit 219 can accept an instruction (access instruction) to use an application which can be executed by the Web server function of the MFP 101.

A printer I/F 216 can establish a communication connection between a printer 220 and the control unit 210. Image data as a print target by the printer 220 is transferred from the control unit 210 to the printer 220 via the printer I/F 216. The printer 220 converts the image data into print data complying with a printing scheme such as an inkjet printing scheme or electrophotographic printing scheme, and prints an image as a print target on a printing medium. A scanner I/F 217 can establish a communication connection between a scanner 221 and the control unit 210. The scanner 221 generates image data by optically reading an image on a document placed on an ADF (Automatic Document Feeder) (not shown) or a document table, and inputs the data to the control unit 210 via the scanner I/F 217.

A network I/F 218 can establish a communication connection between the control unit 210 and the network 110. The network I/F 218 enables communication with an apparatus (for example, the client PC 102 or another MFP) on the network 110.

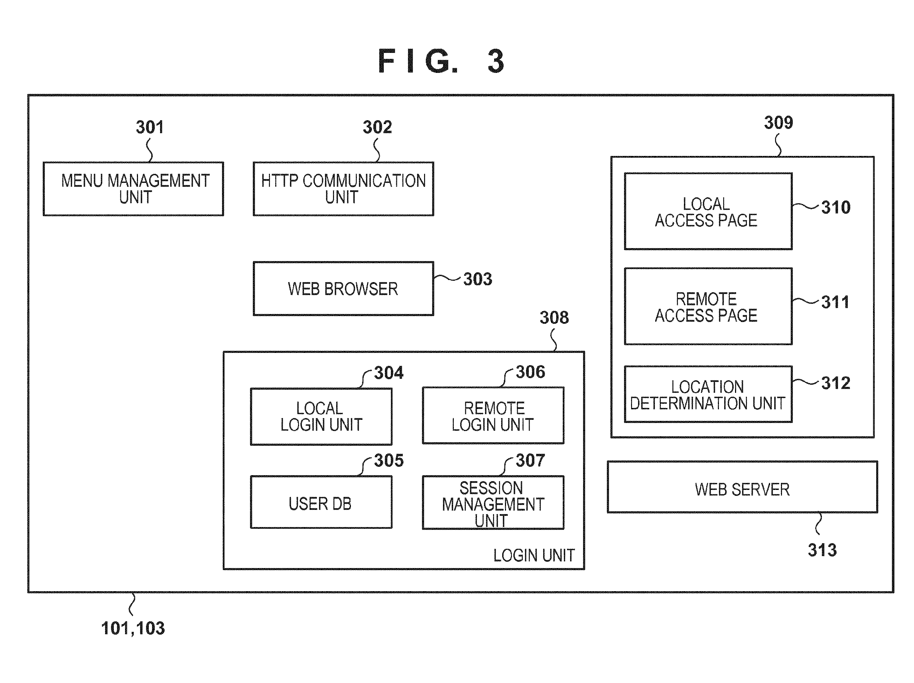

Fig. 3 is a block diagram showing the software configuration of the MFPs 101 and 103. As in the case of Fig. 1, the MFP 101 will be described as a representative example of the MFPs 101 and 103. Each block shown in Fig. 3 is implemented by, for example, making the CPU 211 execute a corresponding program stored in the HDD 214. Note that the MFP 101 may include blocks other than those shown in Fig. 3.

A menu management unit 301 is a module for displaying, on the operation unit 219, a menu screen for activating each software module (block) of the MFP 101. The menu management unit 301 displays, on the operation unit 219, a list of GUI (Graphical User Interface) buttons for issuing instructions to display a copy screen, setting screens by a Web browser (to be described later), and the like. In response to a user's pressing of each button corresponding to "copy", "scan", or the like on such a screen, the CPU 211 activates a corresponding software module.

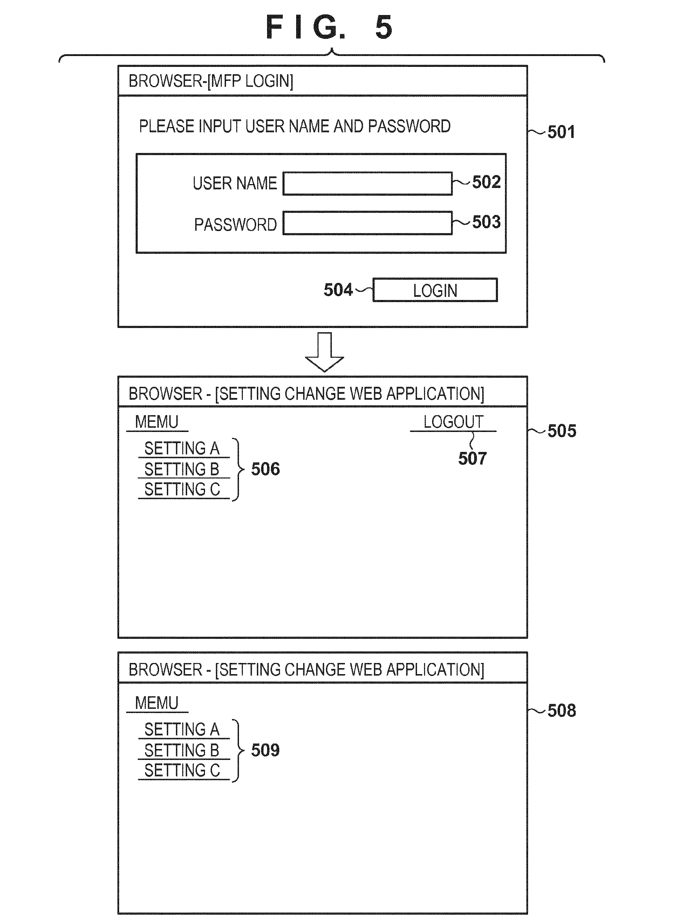

An HTTP communication unit 302 enables communication complying with HTTP. A Web browser 303 performs HTTP communication with a Web server 313 via the HTTP communication unit 302. In addition, the Web browser 303 can perform HTTP communication with the Web server of another apparatus via the HTTP communication unit 302 and the network I/F 218. The Web server 313 is a platform for the operation of a Web application 309. The Web application 309 operates on the Web server 313. In this embodiment, the Web application 309 is a Web application capable of changing the settings of each function of the MFP 101. That is, the user can change (edit) setting information in the MFP 101, on which the Web application 309 operates, via a setting change screen 505 or 508 in Fig. 5 (to be described later) by using the Web application 309 via the Web browser 303.

When the Web browser 303 as a Web client has made an access request to the Web application 309, the Web application 309 executes HTTP communication with the Web client via the Web server 313 and the HTTP communication unit 302. In this case, the Web client is not limited to the Web browser 303 of the MFP 101. For example, the Web browser 303 of the client PC 102 sometimes becomes a Web client.

When the user designates a URL via the operation unit 219, the Web browser 303 requests the Web application 309 for HTML data corresponding to the URL via the Web server 313. In addition, the Web browser 303 receives the HTML data transmitted from the Web application 309 as a response to the request via the Web server 313 and the HTTP communication unit 302. The Web browser 303 then displays a screen based on the received HTML data on the operation unit 219. In this case, the Web server to be used is not limited to the Web server 313 of the MFP 101, and sometimes is a Web server formed as another apparatus connected to the network 110 and having a Web application. The Web application 309 provides the Web client with a UI (User Interface) screen for an operation on the MFP 101 as HTML data. The user can issue, on the UI screen, an instruction to, for example, change setting information in the MFP 101 or print image data.

A local access page 310 is a Web page to be provided to a Web client when the Web browser 303 in the MFP 101 accesses the Web application 309. In addition, a remote access page 311 is a Web page to be provided to a Web client when access is made from the Web browser of an external apparatus.

When access is made to the Web application 309, a location determination unit 312 determines whether the access is made from the Web browser 303 of the same MFP 101. Upon determining that the access to the Web application 309 is that from the Web browser 303 of the same MFP 101, the location determination unit 312 designates the local access page 310 as a Web page to be provided to the Web client. In contrast, upon determining that the access is not that from the Web browser 303 of the same MFP 101 (that is, for example, an access from the Web browser of an external apparatus), the location determination unit 312 designates the remote access page 311 as a Web page to be provided to the Web client.

A login unit 308 executes user authentication for the MFP 101. The login unit 308 includes a local login unit 304, a remote login unit 306, a user DB (Data Base) 305, and a session management unit 307.

The user DB 305 stores the user IDs and passwords of users who are permitted to use the MFP 101 and other authority information. The local login unit 304 displays a login screen on the operation unit 219 when the user starts to use the MFP 101, for example, when the user activates the MFP 101. The local login unit 304 then executes authentication processing upon accepting authentication information (user information) from the user. With regard to the acceptance of authentication information, the local login unit 304 accepts the information when the user types software keys displayed on the operation unit 219 or reads out user information stored in an IC card (memory) loaded in a memory interface (not shown). The local login unit 304 collates the accepted user information with the user DB 305. If the accepted authentication information matches information registered in the user DB 305, the local login unit 304 determines that the authentication is successful, and permits the user to use the MFP 101, that is, the menu screen displayed by the menu management unit 301. Although in this embodiment, the user DB 305 used for authentication is incorporated in the MFP 101, a management server which manages user information may be formed as an external apparatus to perform the above collation of user information on the management server side.

When, for example, the Web browser on the client PC 102 has accessed the Web application 309 of the MFP 101, the remote login unit 306 executes user authentication. When the client PC 102 has accessed the Web application 309 via the HTTP communication unit 302 and the Web server 313, the remote login unit 306 makes an inquiry to the session management unit 307. The remote login unit 306 makes this inquiry to the session management unit 307 to inquire about whether there is any session for the client PC 102. If no session exists, a predetermined authentication screen is transmitted (as a response) to the client PC 102. The remote login unit 306 receives authentication information from the client PC 102 via the HTTP communication unit 302, and executes authentication processing. In this case, the authentication method is the same as that in the case of the local login unit 304. If the authentication succeeds, access from the client PC 102 to the Web application 309 of the MFP 101 is permitted.

The session management unit 307 is controlled by the local login unit 304 and the remote login unit 306. If the authentication has succeeded, each login unit generates a session. The session management unit 307 monitors each session in accordance with the timeout time set by each login unit. If, for example, no user operation is performed for a predetermined time or the user explicitly issues a logout instruction to the operation unit 219 or the Web server 313, the session is finished (discarded).

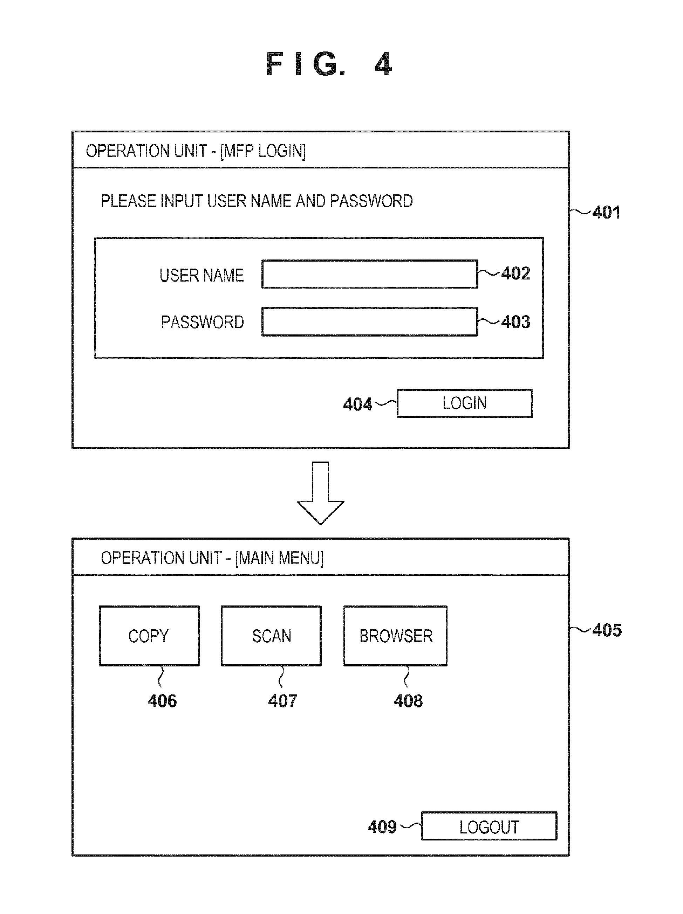

Fig. 4 is a view showing an example of a login screen displayed on the operation unit 219 of the MFP 101. To log in to the MFP 101 after its activation, the user respectively inputs a user name and a password (login information) into a username input field 402 and a password input field 403 on a login screen 401, and presses a login button 404. Upon detecting that the user has pressed the login button 404, the local login unit 304 executes authentication processing, and determines whether the user name and the password match information registered in the user DB 305. If the local login unit 304 determines that they match information registered in the user DB 305, the menu management unit 301 displays a main menu screen 405 on the operation unit 219. This allows the user to operate the MFP 101.

The main menu screen 405 displays a plurality of buttons including, for example, a copy button 406, a scan button 407, and a Web browser button 408. The user can issue an instruction to execute each function by selecting and pressing a corresponding button. The main menu screen 405 may also include buttons other than those shown in Fig. 4. In addition, when the user presses a logout button 409, the local login unit 304 executes logout processing from the MFP 101. The local login unit 304 displays the login screen 401 on the operation unit 219 again after the end of logout processing.

Fig. 5 is a view showing an example of a remote login screen to be displayed on another apparatus when access is made from the Web browser of another apparatus to the Web application 309 of the MFP 101. Assume that in this case, the Web browser 303 of the MFP 103 has accessed the Web application 309 of the MFP 101. In this case, a Web page (input screen data) for displaying a remote login screen 501 shown in Fig. 5 is transmitted to the operation unit 219 of the MFP 103. The remote login screen 501 is then displayed by the Web browser 303 of the MFP 103. The user respectively inputs a user name and a password into a user name input field 502 and a password input field 503 on the operation unit 219 of the MFP 103, and presses a login button 504.

The remote login unit 306 of the MFP 101 executes authentication processing based on the input user name and password (authentication information) upon detecting the pressing of the login button 504. Assume that the user name and the password match information registered in the user DB 305. In this case, the Web server 313 of the MFP 101 redirects to a Web page (execution screen data) for displaying the setting change screen 505 for the Web application 309. In addition, the remote login unit 306 generates a session between the MFP 103 and the Web browser 303. The session management unit 307 of the MFP 101 manages the generated session. If, for example, no access is made from the user for a predetermined time or a logout button 507 on the setting change screen 505 is pressed, the session management unit 307 of the MFP 101 finishes the session. In this case, when the Web browser 303 of the MFP 103 requests for the setting change screen 505 for the Web application 309 of the MFP 101 again after the session is finished (no session exists), the remote login screen 501 is displayed again.

As described above, after the user logs in to the MFP 101, the Web application 309 of the MFP 101 provides the MFP 103 with a Web page for making the Web application 309 of the MFP 101 display the setting change screen 505, thereby displaying the screen on the operation unit 219 of the MFP 103. The user can select a setting for the MFP 101 from setting items 506 on the setting change screen 505. Fig. 5 shows settings A, B, and C as the setting items 506. For example, settings A to C correspond to the respective functions which can be executed by the MFP 101. When the user selects a setting item, a Web page for displaying a detailed setting screen (not shown) is provided to the MFP 103, and the detailed setting screen is displayed on the operation unit 219 of the MFP 103. As a result, the user of the MFP 103 can change (edit) setting information associated with each function of the MFP 101.

The following will describe a case in which the user has accessed (requested for a setting change screen) a Web application of the MFP 101 after logging in to the MFP 101 via the login screen 401 on the operation unit 219 of the MFP 101. That is, when the Web browser 303 of the MFP 101 accesses the Web application 309 of the MFP 101, the Web application 309 provides a Web page for displaying the setting change screen 508 to the Web browser 303.

The setting change screen 508 differs from the setting change screen 505 in that it does not include the logout button 507. In this embodiment, when the setting change screen 508 is displayed, the maintenance of a session on the Web browser 303 is managed in synchronism with a session (login state) on the local login unit 304. That is, when the local login unit 304 executes logout processing, the session on the Web browser 303 is closed in synchronism with the execution of the processing. This arrangement prevents the session on the Web browser 303 from logging out to result in the need to perform authentication processing again for login, when both the local login unit 304 and the Web browser 303 are executing login processing.

Alternatively, the setting change screen 508 may include a logout button like the logout button 507 to allow the user to explicitly perform logout. In this embodiment, the execution of the timeout of a session on the Web browser 303 is limited. For example, the timeout time of a session on the Web browser 303 is controlled in synchronism with the timeout time of a session on the local login unit 304. This arrangement prevents the session on the Web browser 303 from timing out to result in the need to perform authentication processing again for login, when both the local login unit 304 and the Web browser 303 are executing login processing.

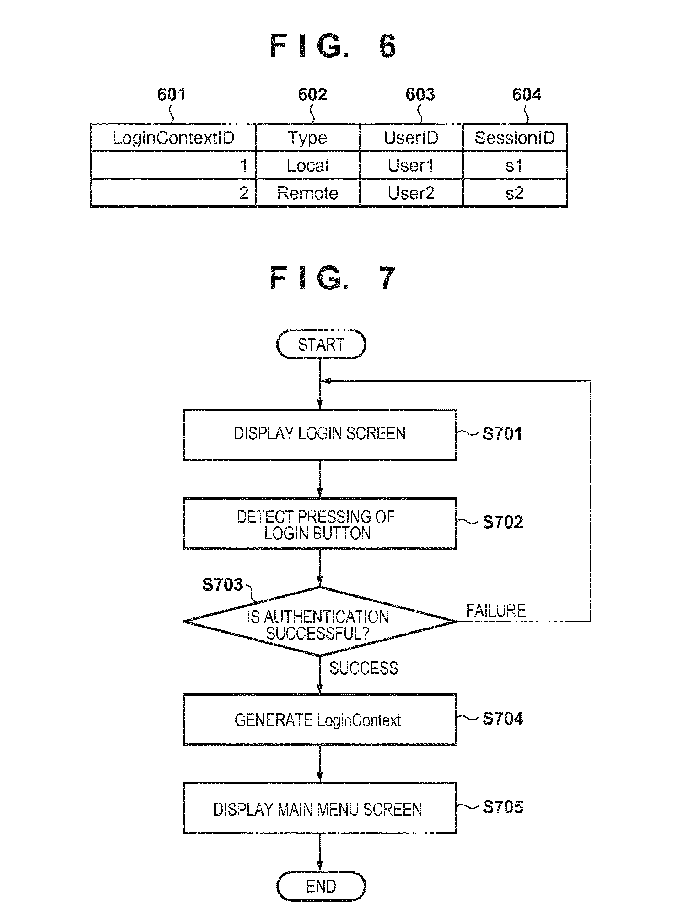

Alternatively, when both the local login unit 304 and the Web browser 303 are executing login processing, a restriction may be imposed on the display of an authentication screen while authentication processing is performed, when the session on the Web browser 303 logs out because of timeout or the like. In this case, for example, the Web application 309 performs authentication processing by using the user ID and password accepted in step S702 in Fig. 7.

Fig. 6 is a view showing an example of a LoginContext management table, which is managed by the session management unit 307 of the MFP 101, and its data structure. A LoginContext is an object holding a login state in the interval from login to logout of the user and information concerning the login user. The Web application 309 in the MFP 101 acquires the information concerning the user from a LoginContext, and executes processing in this embodiment.

An item 601 in Fig. 6 is an identifier for identifying each LoginContext. An item 602 indicates a LoginContext type. In this embodiment, the item 602 indicates whether each LoginContext is generated by the local login unit 304 or the remote login unit 306. The LoginContext indicated as "Local" is the one generated by the local login unit 304. The LoginContext indicated as "Remote" is the one generated by the remote login unit 306. An item 603 is an identifier for identifying each user. An item 604 indicates a SessionID. When an associated HTTP session exists, a SessionID for identifying the HTTP session is stored.

For example, a LoginContext whose LoginContextID in Fig. 6 is "1" is generated by the local login unit 304, and indicates that the SessionID of the associated HTTP session is "s1" in association with the user identified by "User1". Each LoginContext managed in the table in Fig. 6 is managed by the session management unit 307, and is discarded from the table in Fig. 6 at the timing when the corresponding user logs out from the MFP 101. In this manner, the session on the Web browser 303 is synchronized with the login state of the local login unit 304, and is maintained at least while the user logs in to the MFP 101 (session control).

Fig. 7 is a flowchart showing login processing via the operation unit 219 of the MFP 101. The local login unit 304 of the login unit 308 executes this processing. For example, when the MFP 101 is powered on, the processing starts. In step S701, the local login unit 304 displays the login screen 401 on the operation unit 219.

In step S702, the local login unit 304 accepts authentication information (user ID and password) from the user via the password input field 402 and the password input field 403 on the login screen 401. The local login unit 304 then detects the pressing of the login button 404 by the user.

In step S703, the local login unit 304 determines whether the user ID and the password accepted in step S703 match information registered in the user DB 305. If the local login unit 304 determines that they match, that is, the authentication has succeeded, the process advances to step S704. If the local login unit 304 determines that they do not match, that is, the authentication has failed, the local login unit 304 repeats the processing from step S701.

In step S704, the local login unit 304 issues a new LoginContext ID and registers it in the LoginContext table managed by the session management unit 307. In this case, information to be registered includes, for example, a UserID and a LoginContext type. Alternatively, other types of information concerning the user may be registered. In addition, in this processing, since the user has logged in from the operation unit 219, the LoginContext type is "Local" which indicates that the LoginContext is generated by the local login unit 304.

In step S705, when the local login unit 304 notifies the menu management unit 301 of the registration of the LoginContext, the menu management unit 301 displays the main menu screen 405 on the operation unit 219. As a result, the user can operate the MFP 101, and the processing in Fig. 7 is terminated.

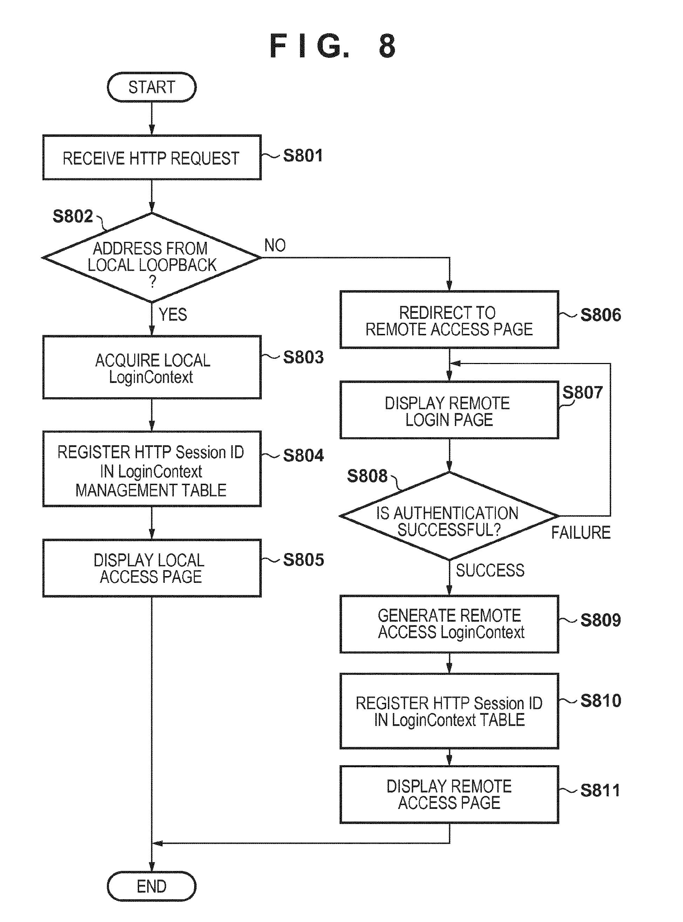

Fig. 8 is a flowchart showing display control processing by the Web application 309 of the MFP 101. When this processing starts, the Web application 309 receives the HTTP request (execution request) transmitted from the Web client in step S801. Note that the Web application 309 has two pages, namely the local access page 310 and the remote access page 311, as URLs. The processing of this flowchart starts when an HTTP request is received from a Web client with respect to either of the URLs.

In step S802, the location determination unit 312 of the Web application 309 analyzes the HTTP request information received in step S801, and determines whether the IP address of the Web client is access from a local loopback. In this case, if the local loopback address or the IP address of the Web client matches the IP address of the MFP 101 on which the Web application 309 operates, the location determination unit 312 determines that the IP address is access from the local loopback, and the process advances to step S803. If the location determination unit 312 determines that the IP address is not access from the local loopback, the process advances to step S806.

In step S803, the Web application 309 acquires the LoginContext generated by the local login unit 304, that is, the LoginContext whose type is "Local", from the session management unit 307. In step S804, the Web application 309 stores the SessionID of the HTTP session contained in the HTTP request received in step S802 in the item 604 of the LoginContext management table in correspondence with the LoginContext acquired in step S803. In step S805, the Web application 309 transmits a Web page (execution screen data) for displaying the setting change screen 508 as an HTTP response to the Web client. In this case, the Web client is the Web browser 303 of the MFP 101. After the processing in step S805, this processing is terminated. In this case, the timeout function set in advance in a session on the Web browser 303 is limited. For example, the timeout time of a session on the Web browser 303 is set to be synchronized with the timeout time of a session on the local login unit 304.

As described above, in this embodiment, when the user accesses the Web application 309 after logging in to the MFP 101 from the operation unit 219, the remote login screen 501 in Fig. 5 is not displayed. As a result, the user need not input authentication information to the Web application 309 in addition to a login operation to the MFP 101, and hence the usability improves. In addition, if the Web application 309 determines in step S802 that the IP address is access from the local loopback, authentication processing itself may be skipped, and a Web page for displaying the setting change screen 508 may be provided to the Web browser 303. Alternatively, in this case, authentication processing or access restriction may be performed by using the user ID and the password accepted in step S702 in Fig. 7.

If the location determination unit 312 determines in step S802 that the IP address of the Web client is not access from the local loopback, the Web application 309 redirects the HTTP request received in step S801 to the remote access page 311 in step S806.

In step S807, the Web application 309 provides a Web page (input screen data) for displaying the remote login screen 501 to the Web client. The remote login unit 306 then acquires the user name and the password respectively accepted via the user name input field 502 and the password input field 503 at the access source (request source). In step S808, the remote login unit 306 determines whether the user ID and the password acquired in step S807 match information registered in the user DB 305. If the remote login unit 306 determines that they match, the process advances to step S809. If the remote login unit 306 determines that they do not match, the processing is repeated from step S807.

In step S809, the remote login unit 306 generates a LoginContext and registers it in the LoginContext management table managed by the session management unit 307. In this case, the type of the LoginContext generated by the remote login unit 306 is "Remote".

In step S810, the remote login unit 306 stores the SessionID of the HTTP session contained in the HTTP request received in step S801 in the item 604 of the LoginContext management table in correspondence with the LoginContext generated in step S809. In this case, as the timeout time of a session for the Web application, the time set in advance for this remote access is used without any change. That is, if HTTP communication is not executed for a predetermined time, the session management unit 307 finishes the session. When an HTTP request is newly transmitted, the processing is executed again from step S801.

In step S811, the Web application 309 transmits a Web page for displaying the setting change screen 505 as an HTTP response to the Web client. This processing is terminated after the processing in step S811.

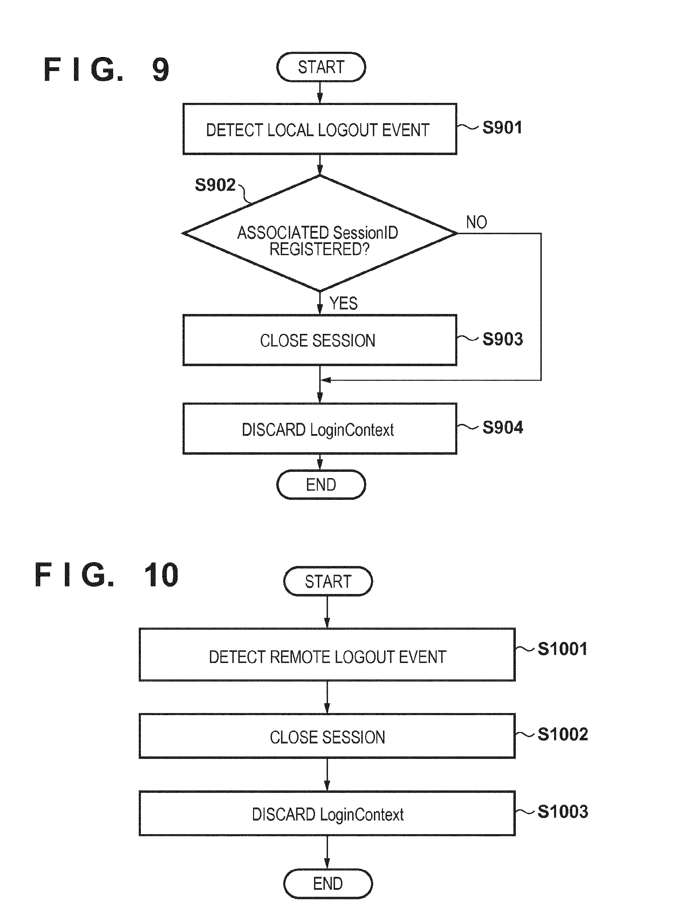

Fig. 9 is a flowchart showing logout processing in the local login unit 304 of the MFP 101. When this processing starts, the local login unit 304 detects, in step S901, the pressing (logout event) of the logout button 409 on the main menu screen 405 displayed on the operation unit 219. Alternatively, the following processing is also executed when the user does not operate the operation unit 219 for a predetermined time or a preset local timeout time elapses.

In step S902, the local login unit 304 determines whether a SessionID is registered in the item 604 of the LoginContext which is managed by the session management unit 307 and whose item 602 is "Local". A SessionID determined as being registered will be referred to as an associated SessionID hereinafter. If the local login unit 304 determines that the SessionID is registered, the process advances to step S903. If the local login unit 304 determines that the SessionID is not registered, the LoginContext which is "Local" is discarded in step S904.

In step S903, the session management unit 307 closes the session with the associated SessionID determined as being registered in step S903. In step S904, the session management unit 307 discards the information of the associated SessionID to be closed from the LoginContext management table, and the LoginContext which is "Local" is also discarded. This processing is terminated after the processing in step S904.

With the processing shown in Fig. 9, after the user logs in to the MFP 101, maintenance control on a session on the Web browser 303 associated with the user who has accessed the Web application 309 is performed in synchronism with the login state set by the local login unit 304.

Fig. 10 is a flowchart showing logout processing by the remote login unit 306 of the MFP 101. When this processing starts, the remote login unit 306 detects the pressing (logout event) of the logout button 507 on the setting change screen 505 in step S1001. Alternatively, the following processing is also executed when the Web application 309 does not receive any HTTP request for a predetermined time or a preset remote timeout time has elapsed.

In step S1002, the remote login unit 306 searches for a LoginContext whose item 602 in the LoginContext management table is "Remote", with the SessionID in the item 604 matching the ID of an HTTP request. The session management unit 307 then closes the session with the SessionID. In step S1003, the session management unit 307 discards the SessionID from the item 604 of the found LoginContext, and also discards the LoginContext which is "Remote". This processing is terminated after the processing in step S1003.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention.

## Claims

1. An information processing apparatus (101, 103) which is configured to execute an application requiring user authentication, the apparatus comprising:
reception means (309) for receiving (S801) a request for a Web page of the application from one of a local browser and a remote browser; and
control means (210) for displaying (S805) the Web page without performing authentication in a case where the local browser requests the Web page after login to the information processing apparatus has been performed, and for causing the remote browser to display (S807) an authentication screen and display (S811) the Web page if the authentication has been successful, in a case where the remote browser requests the Web page.

2. The apparatus according to claim 1, further comprising:
determination means (312) for determining (S802) whether a request source of a request received by said reception means is the local browser; and
wherein said control means is configured to display the web page by using login information input to the information processing apparatus by a user, in a case where said determination means determines that the request source is the local browser.

3. The apparatus according to claim 2, wherein in a case where said determination means determines that the request source is the local browser and authentication by said authentication means has succeeded, said control means is configured to transmit (S805) execution screen data of the application as a response to a request received by said reception means to the request source.

4. The apparatus according to claim 2 or claim 3, further comprising session control means for maintaining a session on the application while the user is logged in to the information processing apparatus, in a case where said determination means determines that the request source is the local browser and authentication by said authentication means has succeeded.

5. The apparatus according to claim 4, wherein said session control means is configured to maintain a session on the application while the user is logged in to the information processing apparatus by imposing a restriction on execution of timeout of the session on the application.

6. The apparatus according to claim 5, wherein said session control means is configured to maintain a session on the application while the user is logged in to the information processing apparatus by synchronizing a timeout time of the session on the application with a login state of the user with respect to the information processing apparatus.

7. The apparatus according to any one of claims 2 to 6, wherein said determination means is configured to refer to an address of a request source contained in a request received by said reception means to determine whether the request source is the local browser.

8. The apparatus according to any preceding claim, wherein the information processing apparatus includes a Web server function configured to execute the application requiring user authentication.

9. The apparatus according to any preceding claim, wherein the information processing apparatus is an image forming apparatus, and
the application is an application for editing settings in the image forming apparatus.

10. A control method executed in an information processing apparatus which is configured to execute an application requiring user authentication, the method comprising:
a reception step (S801) of receiving a request for a Web page of the application from one of a local browser and a remote browser; and
a control step of displaying (S805) the Web page without performing authentication in a case where the local browser requests the Web page after login to the information processing apparatus has been performed, and causing the remote browser to display (S807) an authentication screen and to display (S811) the Web page if the authentication has been successful, in a case where the remote browser requests the Web page.

11. A program which, when run on a device, causes the device to execute a method according to claim 10.

12. A computer-readable storage medium storing a program according to claim 11.
